# EUROPEAN PATENT SPECIFICATION

(11) **EP 3 904 591 B1**
(45) Date of publication and mention of the grant of the patent: **18.02.2026**
(21) Application number: 19901746.8
(22) Date of filing: 05.11.2019
(51) Int. Cl.: D06N 3/00, D06M 11/00, D06M 13/402, D06M 15/564, D06N 3/14

(54) **NAPPED ARTIFICIAL LEATHER AND METHOD FOR PRODUCING THE SAME**
AUFGERAUTES KUNSTLEDER UND VERFAHREN ZU DESSEN HERSTELLUNG
SIMILICUIR NAPÉ ET PROCÉDÉ DE PRODUCTION DE CELUI-CI

(30) Priority: 27.12.2018 JP 2018246188
(43) Date of publication of application: 03.11.2021
(73) Proprietor: Kuraray Co., Ltd., Kurashiki-shi, Okayama 710-0801 (JP)
(72) Inventor: HISHIDA Hiroyuki, Okayama-shi, Okayama 702-8601 (JP); NAKAYAMA Kimio, Okayama-shi, Okayama 702-8601 (JP); FUJISAWA Michinori, Okayama-shi, Okayama 702-8601 (JP); INOUE Kazumasa, Okayama-shi, Okayama 702-8601 (JP)
(74) Representative: Vossius & Partner Patentanwälte Rechtsanwälte mbB
(86) International application number: PCT/JP2019/043249
(87) International publication number: WO 2020/137168

(56) References cited:
- EP-A1- 1 857 577
- EP-A1- 2 479 320
- CN-A- 106 521 984
- CN-A- 107 936 676
- JP-A- 2002 129 480
- JP-A- 2003 073 983
- JP-A- 2004 190 179
- JP-A- 2005 256 268
- JP-A- H01 192 884
- JP-A- S 480 854
- JP-A- S 484 474
- JP-A- S5 161 605
- KR-A- 20160 032 860

## Description

### [Technical Field]

The present invention relates to a napped artificial leather having excellent color fastness to rubbing and including a fiber-entangled body of ultrafine fibers.

### [Background Art]

Napped artificial leathers having a suede-like napped surface are suitably used as surface materials for bags, shoes, clothing, articles of furniture, car seats, general merchandise, and the like. A napped artificial leather includes a fiber-entangled body such as a non-woven fabric, and an elastic polymer impregnated into the fiber-entangled body, and has a napped surface formed by napping fibers on at least one side thereof.

Usually, a napped artificial leather is dyed, or colored by including a pigment in the fibers or the elastic polymer. The colored napped artificial leather is required to have high color fastness to rubbing that can prevent color migration when it is rubbed against another material. For example, PTL 1 listed below discloses a leather-like sheet that includes a substrate layer having an upper layer formed by an entangled non-woven fabric of polyamide-based ultrafine fibers of 0.01 decitex or less, and a polyurethane, and a lower layer formed by an entangled non-woven fabric made of fibers different from polyamide, and a polyurethane, a surface of the upper layer being napped and dyed with a dye, wherein the fibers of the lower layer are substantially not dyed, the polyurethane is dyed, and a polyolefin such as paraffin wax is applied to the surface of the upper layer that is napped and dyed. Also, PTL 1 discloses that such a leather-like sheet has excellent dyeing color fastness to rubbing.

Although this is not a technique relating to a napped artificial leather having excellent color fastness to rubbing and including a fiber-entangled body of ultrafine fibers, PTL 2 listed below discloses a non-woven fabric for an artificial leather that includes a non-woven fabric, and a sizing agent and a fatty acid amide represented by the general formula R₁CONR₃(R₂NR₃)nOCR₁ (where R₁ is an alkyl group having 12 to 28 carbon atoms, R₂ is an alkyl group having 1 to 4 carbon atoms, R₃ is H or an inter-molecular crosslink, and n is a number of 1 to 8) that are present on surfaces of the fibers constituting the non-woven fabric. PTL 2 discloses that such a non-woven fabric for an artificial leather has excellent flexibility, and is suitable for production of an artificial leather having elasticity.

PTL 3 listed below discloses a method for dyeing a leather-like sheet characterized in that, when a leather-like sheet including a fiber structure of fibers composed mainly of polyamide ultrafine fibers and/or fiber bundles thereof and a polymer composed mainly of a polyurethane is dyed with a dye mainly composed a metal complex salt dye, an object to be dyed is subjected in advance to a water repellent treatment so as to have a degree of water repellency in the range of 55 to 75, and is dyed in an aqueous dye at a temperature of 80°C or more. Also, PTL 3 discloses using, for the water repellent treatment, a solution or dispersion of a water-repellent agent of a cationic activator including a fatty acid amide [general formula R₃CONR₃(R₂NR3)nOCR₁ (where R₁ is an alkyl group having 12 to 28 carbon atoms, R₂ is an alkyl group having 1 to 4 carbon atoms, R₃ is H or an inter-molecular crosslink, and n is a number of 1 to 8)] or a quaternary ammonium salt obtained by causing epihalohydrin to act on the fatty acid amide.

### [Citation List]

### [Patent Literatures]

[PTL 1] Japanese Laid-Open Patent Publication No. 2003-073983
[PTL 2] Japanese Laid-Open Patent Publication No. 61-186570
[PTL 3] Japanese Laid-Open Patent Publication No. 01-192884

Further relevant information can be found in the following documents: JP 2003 073983 A, KR 2016 0032860 A, CN 107 936 676 A, EP 2 479 320 A1, and EP 1 857 577 A1.

### [Summary of Invention]

### [Technical Problem]

As a napped artificial leather with a quality appearance, a napped artificial leather including a fiber-entangled body of ultrafine fibers is known. As disclosed in PTL 1, the napped artificial leather including a fiber-entangled body of ultrafine fibers has the problem of low color fastness to rubbing. In particular, when the napped artificial leather including a fiber-entangled body of ultrafine fibers is colored in a dark color, the color fastness to rubbing of the napped artificial leather is likely to be reduced, which may result in a practical problem. Also, when an attempt is made to increase the color fastness to rubbing of the napped artificial leather by applying a polyolefin such as paraffin wax to the napped surface as described above, the quality of the touch may be reduced, as a result of, for example, tack being caused on the surface, leading to a problem such as a lack of quality appearance.

When the fatty acid amide disclosed in PTL 2 is applied to the napped artificial leather and dried, the fatty acid amide is attached in the form of a film to the fiber surfaces, so that the effect of improving the color fastness to rubbing cannot be obtained.

The leather-like sheet disclosed in PTL 3 is dyed after being subjected to a water repellent treatment using a water-repellent agent, and therefore the water-repellent agent tends to be detached therefrom. When the fatty acid amide and the fatty acid amide salt made of a quaternary ammonium salt obtained by causing epihalohydrin to act on the fatty acid amide disclosed in PTL 3 are applied to the napped artificial leather and dried, they are attached in the form of a film to the fiber surfaces, and therefore the effect of improving the color fastness to rubbing cannot be achieved.

It is an object of the present invention to provide a colored napped artificial leather including a fiber-entangled body of ultrafine fibers, wherein the napped artificial leather has excellent color fastness to rubbing.

### [Solution to Problem]

An aspect of the present invention is a colored napped artificial leather including: a fiber-entangled body including ultrafine fibers having an average single fiber fineness of 0.5 dtex or less; and an elastic polymer impregnated into the fiber-entangled body, the napped artificial leather having, at least on one side thereof, a napped surface formed by napping the ultrafine fibers, wherein the napped artificial leather further includes particles of a fatty acid amide-based compound that are at least attached to surfaces of the ultrafine fibers and that have an average particle size of 0.1 to 10 µm. With such a napped artificial leather, a fatty acid amide-based compound having an appropriate size is attached in the form of particles to the surfaces of ultrafine fibers, whereby the napped ultrafine fibers are less likely to be cut even when the ultrafine fibers are rubbed against another material. Therefore, even when the ultrafine fibers are colored in a dark color, the colored ultrafine fibers are less likely to migrate to another material, thus making it possible to obtain a novel napped artificial leather having excellent color fastness to rubbing. It seems that the particles of the fatty acid amide-based compound impart rolling-sliding properties to the fiber surfaces, thus reducing the friction against another material. In particular, it is preferable that the particles of the fatty acid amide-based compound are attached to the ultrafine fibers constituting the napped surface, because the above-described effect becomes more prominent.

In the above-described napped artificial leather, it is preferable that the fatty acid amide-based compound has a melting point of 110°C or more. Particles of such a long-chain fatty acid amide-based compound having a relatively high melting point retain the particulate form even under a high temperature environment, without being melted. Therefore, the particulate form is less likely to undergo change over time even under a high temperature environment.

It is preferable that a content ratio of the particles is 0.2 to 5 mass% in the napped artificial leather, because then a napped artificial leather having particularly excellent color fastness to rubbing can be obtained.

In the napped artificial leather, it is preferable that the napped surface has a lightness L* value of 40 or less in a color coordinate space (L*a*b* color space), because this results in a dark color, and thus can achieve a particularly prominent effect of improving the color fastness to rubbing.

Another aspect of the present invention is a method for producing a colored napped artificial leather, including the steps of: preparing a napped artificial leather gray fabric including a fiber-entangled body of ultrafine fibers having an average single fiber fineness of 0.5 dtex or less, and an elastic polymer impregnated into the fiber-entangled body, the napped artificial leather gray fabric having, at least on one side thereof, a napped surface formed by napping the ultrafine fibers; and applying, to the napped artificial leather gray fabric, a dispersion of particles of a fatty acid amide-based compound that have an average particle size of 0.1 to 10 µm, and drying the dispersion at a temperature less than a melting point of the fatty acid amide-based compound. With such a production method, a napped artificial leather having excellent color fastness to rubbing as described above can be achieved for a napped artificial leather including a fiber-entangled body of ultrafine fibers.

### [Advantageous Effects of Invention]

According to the present invention, it is possible to obtain a colored napped artificial leather including a fiber-entangled body of ultrafine fibers, wherein the napped artificial leather has excellent color fastness to rubbing.

### [Brief Description of Drawing]

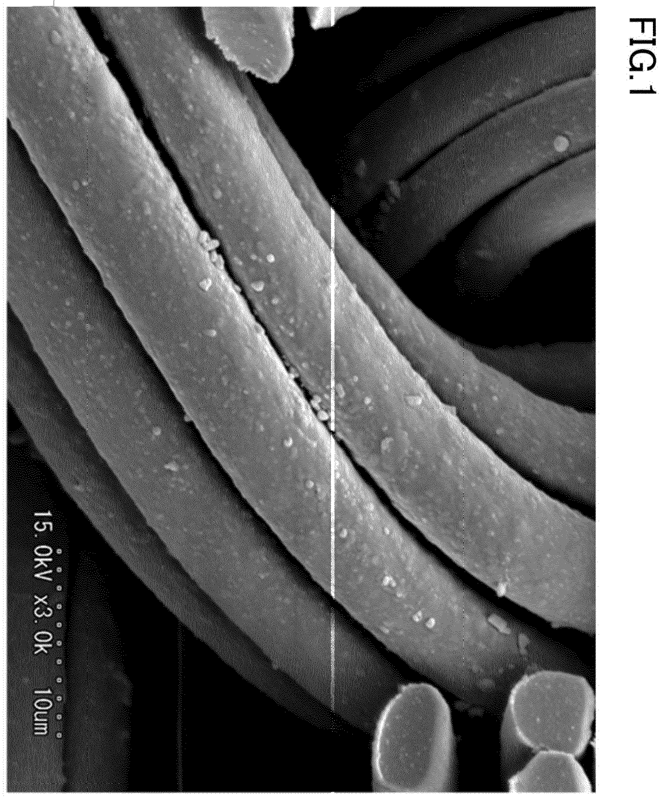

[FIG. 1] FIG. 1 is a photograph showing particles of a fatty acid amide-based compound that are attached to the surfaces of ultrafine fibers of a napped artificial leather obtained in Example 1.

### [Description of Embodiment]

A napped artificial leather according to the present invention will be described in detail, in conjunction with an example of a production method thereof. A colored napped artificial leather according to the present embodiment includes a fiber-entangled body including ultrafine fibers having an average single fiber fineness of 0.5 dtex or less; and an elastic polymer impregnated into the fiber-entangled body, the napped artificial leather having, at least on one side thereof, a napped surface formed by napping the ultrafine fibers, wherein the napped artificial leather further includes particles of a fatty acid amide-based compound that are at least attached to surfaces of the ultrafine fibers and that have an average particle size of 0.1 to 10 µm.

Examples of the fiber-entangled body including ultrafine fibers having an average single fiber fineness of 0.5 dtex or less include a non-woven fabric, a woven fabric, and a knitted fabric each including ultrafine fibers having an average single fiber fineness of 0.5 dtex or less, and combinations thereof.

Specific examples of a resin for forming ultrafine fibers include, for example, thermoplastic resins such as; aromatic polyesters such as polyethylene terephthalate (PET), isophthalic acid-modified PET, sulfoisophthalic acid-modified PET having cationic dye dyeability, polybutylene terephthalate, and polyhexamethylene terephthalate; aliphatic polyesters such as polylactic acid, polyethylene succinate, polybutylene succinate, polybutylene succinate adipate, and a polyhydroxybutyrate-polyhydroxyvalerate copolymer; nylons such as nylon 6, nylon 66, nylon 10, nylon 11, nylon 12, and nylon 6-12; polyolefins such as polypropylene, polyethylene, polybutene, polymethylpentene, and a chlorine-based polyolefin; modified polyvinyl alcohols such as a modified polyvinyl alcohol containing 25 to 70 mol% of an ethylene unit; and elastomers such as polyurethane-based elastomer, a polyamide elastomer, and a polyester elastomer. These thermoplastic resins may be used alone or in a combination of two or more.

In order to produce the colored napped artificial leather, ultrafine fibers may be colored. Examples of the method for coloring the ultrafine fibers include a method involving dyeing, and a method involving blending, in the resin for forming the ultrafine fibers, a pigment including, for example, an inorganic pigment or an organic pigment such as carbon black, perylene black, titanium oxide, silica and phthalocyanine. Among these, the method in which the resin for forming the ultrafine fibers is colored with a pigment is preferable because high fastness can be achieved. In this case, the ratio of the pigment in the ultrafine fibers is preferably 0.5 to 15 mass%, and more preferably 1.0 to 10 mass%, because a napped artificial leather having a dark color with a lightness L* value of 40 or less, for which the effects of the present invention become prominent, can be easily achieved. If necessary, various stabilizers such as an ultraviolet absorber, a heat stabilizer, a deodorant, and an antifungal agent may be included in the ultrafine fibers.

The ultrafine fibers have an average single fiber fineness of 0.5 dtex or less, preferably 0.001 to 0.5 dtex, and more preferably 0.01 to 0.3 dtex. When the single fiber fineness of the ultrafine fibers exceeds 0.5 dtex, the napped ultrafine fibers are less likely to provide dense fluff, and the quality appearance is likely to be reduced. When the single fiber fineness of the ultrafine fibers is too low, the fiber tenacity becomes too low, so that the mechanical properties of the resulting napped artificial leather tend to be reduced. Note that the single fiber fineness is determined by imaging a cross section of the napped artificial leather that is parallel to the thickness direction thereof using a scanning electron microscope (SEM) at a magnification of 3000X, and calculating an average value of the diameters of 15 evenly selected fibers by using the densities of the resins that form the fibers.

In the present embodiment, a non-woven fabric of ultrafine fibers formed by forming a web of ultrafine fiber-generating fibers such as island-in-the-sea (matrix-domain) composite fibers, and subjecting the web to an entangling treatment, followed by an ultrafine fiber-generating treatment will be described in detailed as a representative example of the fiber-entangled body including ultrafine fibers. Note that as the ultrafine fiber-generating fibers, strip/division-type composite fibers or the like may be used in place of island-in-the-sea composite fibers.

The island component of the island-in-the-sea composite fibers is a resin component for forming ultrafine fibers, and the above-described resin for forming ultrafine fibers can be used. The sea component of the island-in-the-sea composite fibers is a component that is selectively removed by extraction using a solvent or is selectively removed by decomposition using hot water or a decomposition agent, when the island-in-the-sea composite fibers are converted into fiber bundles of ultrafine fibers. Specific examples of the resin for forming the sea component include polyvinyl alcohol-based resins such as a water-soluble thermoplastic polyvinyl alcohol (water-soluble PVA), polyethylenes, polypropylenes, polystyrenes, ethylenepropylene copolymers, ethylene-vinyl acetate copolymers, styrene-ethylene copolymers, and styrene acrylic copolymers.

Examples of the method for producing the web of island-in-the-sea composite fibers include a method in which island-in-the-sea composite fibers of filaments that have been spun by spunbonding or the like are collected on a net without being cut, to form a filament web, and a method in which filaments that have been melt-spun are cut into staples to form a staple web. In addition, the formed web may be fusion bonded in order to impart shape stability thereto. In any of the processes until the sea component of the island-in-the-sea composite fibers is removed to form ultrafine fibers, fiber shrinking such as a heat shrinking treatment using water vapor or hot water, or dry-heating may be performed to densify the island-in-the-sea composite fibers.

By laying the web in a plurality of layers and subjecting the web to an entangling treatment, an entangle body of the island-in-the-sea composite fibers is formed. Specifically, for example, the web is laid in a plurality of layers in the thickness direction using a cross lapper or the like, and thereafter the web is needle punched simultaneously or alternately from both outer sides thereof under conditions in which at least one barb penetrates the web, or the web is subjected to a hydroentangling treatment in which the web is entangled using jets of water. Through such a process, an entangle body of the island-in-the-sea composite fibers in which the island-in-the-sea composite fibers are three-dimensionally entangled to each other can be obtained. Note that the entangle body of the island-in-the-sea composite fibers is preferably added with a silicone-based oil solution or a mineral oil-based oil solution such as an oil solution for preventing the needles from breaking, an antistatic oil solution, or an entangling enhancing oil solution at any stage from its production to the entangling treatment. Also, the entangle body of the island-in-the-sea composite fibers is preferably subjected to a heat shrinking treatment. Through the heat shrinking treatment, the entangled state of the entangle body of the island-in-the-sea composite fibers is densified, making the shape retainability favorable. Examples of the heat shrinking treatment include a heat shrinking treatment using water vapor, and a treatment involving immersing in warm water at 70 to 150°C, and a heat shrinking treatment using water vapor is particularly preferable.

Then, an elastic polymer is impregnated into voids of the entangle body of the island-in-the-sea composite fibers.

Specific examples of the elastic polymer include polyurethanes, acrylonitrile elastomers, olefin elastomers, polyester elastomers, polyamide elastomers, and acrylic elastomers. Among these, polyurethanes are preferable. In order to produce a colored napped artificial leather, the elastic polymer may be colored. Examples of the method for coloring the elastic polymer include a method involving including the above-described pigments in the elastic polymer. In addition to a colorant such as a pigment, an antioxidant, an ultraviolet absorber, a fluorescent agent, an antifungal agent, a lubricant, a water-repellent agent, an oil-repellent agent, a filler, an inorganic fine particles, a conductive agent and the like may be included in the elastic polymer.

As a method for impregnating the elastic polymer into the voids of the entangle body of the island-in-the-sea composite fibers, an elastic polymer liquid of an emulsion, solution, or the like of the elastic polymer is impregnated into the voids of the entangle body of the island-in-the-sea composite fibers, thereafter the amount of the elastic polymer liquid applied is adjusted by roll nipping as needed, and additionally the elastic polymer is coagulated from the elastic polymer liquid impregnated into the voids of the entangle body of the island-in-the-sea composite fibers. Examples of the method for coagulating the elastic polymer include a method in which the elastic polymer is coagulated by drying the elastic polymer liquid, and a method in which the elastic polymer is wet-coagulated from the elastic polymer liquid.

As the content ratio of the elastic polymer, the ratio of the elastic polymer included in the obtained napped artificial leather is preferably 5 to 50 mass%, and more preferably 8 to 40 mass%, because a soft texture with a quality appearance can be achieved.

The sea component of the island-in-the-sea composite fibers included in the entangle body of the island-in-the-sea composite fibers is removed and converted into ultrafine fibers. Examples of the method for removing the sea component include a method in which the entangle body of the island-in-the-sea composite fibers is treated with a solvent or a decomposition agent capable of dissolving or decomposing only the resin that forms the sea component, without dissolving or decomposing the resin that forms the island component. For example, when the resin that forms the sea component is a water-soluble PVA resin, warm water at 85 to 100°C is used as the solvent. Thus, an artificial leather gray fabric including a fiber-entangled body of ultrafine fibers having an average single fiber fineness of 0.5 dtex or less, and an elastic polymer impregnated into the fiber-entangled body is produced.

Then, the surface of the artificial leather gray fabric is buffed with a contact buff, an emery buff or the like, whereby the fibers on the surface are napped to form a napped surface on which the ultrafine fibers are napped. It is preferable that the buffing is performed using sandpaper or emery paper with a grit number of about 120 to 600, for example. Thus, a napped artificial leather gray fabric is produced.

If necessary, the napped artificial leather gray fabric may be subjected to a finishing treatment such as a flexibilizing treatment by crumpling, a reverse seal brushing treatment, an antifouling treatment, a hydrophilization treatment, a lubricant treatment, an antioxidant treatment, an ultraviolet absorber treatment, a fluorescent agent treatment, or a flame retardant treatment.

An elastic polymer capable of locally fixing the vicinity of a base of the napped fibers may be further applied to the napped surface of the napped artificial leather gray fabric, in order to inhibit the napped fibers from falling out, or to make them less likely to be raised by friction, thus improving the quality the of the appearance. Specifically, for example, a solution or an emulsion containing the elastic polymer is applied onto the napped surface, follow by drying, to solidify the elastic polymer. By applying the elastic polymer capable of locally fixing the vicinity of the base of the napped fibers located on the napped surface, the vicinity of the base of the fibers located on the napped surface is constrained by the elastic polymer, thus making the fibers less likely to fall out. As the specific example of the elastic polymer that is applied into the napped surface, the same elastic polymers as those described above can be used.

For coloring, the obtained napped artificial leather gray fabric may be dyed with a dye such as a disperse dye, an acid dye, a cationic dye, a sulfur dye, a metal complexed dye, or a threne dye, as needed. The dyeing method is not particularly limited, and is preferably selected as appropriate from a high-pressure jet dyeing method, a jigger dyeing method, a thermosol continuous dyeing method, a wince dyeing method and the like, according to the types of the fibers and the dye.

As described above, by inclusion of a pigment in the ultrafine fibers, inclusion of a pigment in the elastic polymer, dyeing of the napped artificial leather gray fabric, or a combination thereof, a colored napped artificial leather is obtained.

The napped artificial leather according to the present embodiment is a colored napped artificial leather further including particles of a fatty acid amide-based compound having an average particle size of 0.1 to 10 µm (hereinafter also simply referred to as the particles of the fatty acid amide-based compound), the particles being attached to at least the surfaces of the ultrafine fibers.

The fatty acid amide-based compound is a compound having a long-chain fatty acid group and an amide group in the molecule. Specific examples thereof include saturated fatty acid amides such as lauric acid amide (melting point: 87°C), palmitic acid amide (melting point: 100°C), stearic acid amide (melting point: 101°C), and hydroxy stearic acid amide (melting point: 107°C); unsaturated fatty acid amides such as oleic acid amide (melting point: 75°C) and erucic acid amide (melting point: 81°C); substituted amides such as N-stearyl stearic acid amide (melting point: 95°C), N-stearyl oleic acid amide (melting point: 67°C), N-oleyl stearic acid amide (melting point: 74°C), and N-stearyl erucic acid amide (melting point: 69°C); methylol amides such as methylol stearic acid amide (melting point: 110°C); saturated fatty acid bisamides such as methylene bisstearic acid amide (melting point: 142°C), ethylene biscapric acid amide (melting point: 161°C), ethylene bislauric acid amide (melting point: 157°C), ethylene bisstearic acid amide (melting point: 145°C), ethylene bishydroxystearic acid amide (melting point: 145°C), ethylene bisbehenic acid amide (melting point: 142°C), hexamethylene bisstearic acid amide (melting point: 140°C), hexamethylene bisbehenic acid amide (melting point: 142°C), hexamethylene bishydroxystearic acid amide (melting point: 135°C), and N,N'-distearyl adipic acid amide (melting point: 141°C); unsaturated fatty acid bisamides such as ethylene bisoleic acid amide (melting point: 119°C), ethylene biserucic acid amide (melting point: 120°C), hexamethylene bisoleic acid amide (melting point: 110°C), N,N'-dioleyl adipic acid amide (melting point: 118°C), and N,N'-dioleyl sebacic acid amide (melting point: 113°C); and fatty acid ester amides such as stearamide ethyl stearate (melting point: 82°C). Note that a fatty acid amide salt exemplified by a quaternary ammonium salt of fatty acid amide and the like is not included in the fatty acid amide-based compound according to the present embodiment. The fatty acid amide salt is solidified in the form of a film, rather than being solidified in the form of particles. Furthermore, a fatty acid amide crosslinked by a carbonyl group or the like, exemplified by [the general formula R₃CONR₃(R₂NR3)nOCR₁ (where R₁ is an alkyl group having 12 to 28 carbon atoms, R₂ is an alkyl group having 1 to 4 carbon atoms, and R₃ is H or an inter-molecular crosslink, where n is a number of 1 to 8)], does not have a clear melting point, and therefore are solidified in the form of a film, rather than being solidified in the form of particles.

The fatty acid amide-based compound included in the napped artificial leather according to the present embodiment is attached in the form of particles at least to the surfaces of the ultrafine fibers. Here, being attached in the form of particles means that the fatty acid amide-based compound is present on the surfaces of the ultrafine fibers in the form of independent particles such as spherical, grid-like, columnar, prismatic, or atypical particles. In order to allow the fatty acid amide-based compound to be attached in the form of particles, it is preferable that the fatty acid amide-based compound is not softened or melted to lose the particulate form, or in other words, to become non-particulate, by heat applied thereto during production or use of the napped artificial leather. It is also preferable that the type and the melting point of the fatty acid amide-based compound is selected as appropriate such that the fatty acid amide-based compound will not form a film (not be turned into a film) even when it is applied in the form of particles. While depending also on the production conditions and usage conditions of the napped artificial leather, as the particles of the fatty acid amide-based compound, it is therefore preferable to use particles of a fatty acid amide-based compound having a high-melting point, or more specifically, particles of a fatty acid amide-based compound having a melting point of preferably 110°C or more, and more preferably 120°C or more, because such particles are less likely to be softened or melted to lose the particulate form under commonly used production conditions and usage conditions of the napped artificial leather.

The average particle size of the particles of the fatty acid amide-based compound is 0.1 to 10 µm, and is preferably 0.2 to 8 µm. When the average particle size of the particles of the fatty acid amide-based compound is less than 0.1 µm, the effect of making the napped ultrafine fibers less likely to be cut when the napped artificial leather is rubbed against another material is reduced. When the average particle size of the particles of the fatty acid amide-based compound exceeds 10 µm, the particles of the fatty acid amide-based compound appear white on the napped surface of the colored napped artificial leather, and the appearance tends to be reduced. Note that the average particle size of the particles is determined by imaging the surface of the napped artificial leather using a scanning electron microscope (SEM) at a magnification of 3000X, and calculating an average value of all particle sizes included in an image of 15 evenly selected locations.

The content ratio of the particles of the fatty acid amide-based compound in the napped artificial leather is preferably 0.2 to 5 mass%, and more preferably 0.4 to 4 mass%. When the content ratio of the particles of the fatty acid amide-based compound is too high, the napped surface tends to be whitened, or the surface touch tends to be affected. When the content ratio of the particles of the fatty acid amide-based compound is too low, the effect of improving the color fastness to rubbing tends not to be sufficiently exerted.

The method for applying the particles of the fatty acid amide-based compound having an average particle size of 0.1 to 10 µm to the napped artificial leather gray fabric is not particularly limited. An example thereof is a method in which the napped artificial leather gray fabric is impregnated with a dispersion in which the particles of the fatty acid amide-based compound having an average particle size of 0.1 to 10 µm are dispersed in a dispersing medium such as water, and is thereafter pulled up and dried. Although the conditions for drying the napped artificial leather impregnated with the dispersion of the particles of the fatty acid amide-based compound is not particularly limited, it is preferable that the napped artificial leather is dried at a temperature at which the particles of the fatty acid amide-based compound are not melted, for example, at a temperature less than or equal to the melting point of the particles of the fatty acid amide-based compound. Specific examples of the drying temperature include a temperature lower than the melting point by 5 to 30°C lower, and even by 10 to 20°C. By drying the dispersing medium in the napped artificial leather impregnated with the dispersion of the particles of the fatty acid amide-based compound, the particles of the fatty acid amide-based compound are attached to the surfaces of the ultrafine fibers included in the napped artificial leather. Also, a migration phenomenon occurring when drying the dispersion of the particles of the fatty acid amide-based compound can be used to cause the particles of the fatty acid amide-based compound to be unevenly distributed on the surface side, thus effectively improving the color fastness to rubbing with an even lower content ratio. Thus, a napped artificial leather is obtained.

The napped artificial leather according to the present embodiment is colored as described above, and is colored preferably in a dark color. When the napped artificial leather is colored in a dark color, the effects of the present invention can be prominently achieved. It is preferable that the dark-color napped artificial leather is colored such that the napped surface has a lightness L* value of preferably 40 or less, and more preferably 35 or less in a color coordinate space, because the color fastness to rubbing improving effect of the present invention becomes prominent.

### [Examples]

Hereinafter, the present invention will be described in further detail by way of examples. It should be appreciated that the scope of the invention is by no means limited to the examples.

### [Example 1]

A water-soluble thermoplastic polyvinyl alcohol (PVA) was prepared as a sea component, and an isophthalic acid-modified polyethylene terephthalate (IP-modified PET) to which 5 mass% of carbon black had been added was prepared as an island component. Then, the sea component and the island component were each melted, and supplied to a multicomponent fiber spinning spinneret having nozzle holes disposed so as to form a cross section on which 12 island component portions having uniform cross-sectional areas were distributed in the sea component resin, and the molten strands were discharged from the nozzle holes. At this time, the pressure was adjusted such that the mass ratio between the sea component and the island component satisfied Sea component/Island component = 25/75.

Then, the molten strands were drawn, to spun island-in-the-sea composite fibers having a fineness of 3.3 dtex. The island-in-the-sea composite fibers were continuously piled on a movable net, and lightly pressed with a metal roll heated to suppress fuzzing on the surface. Then, the island-in-the-sea composite fibers were separated from the net, and allowed to pass between the heated metal roll and a back roll while being pressed. Thus, a web having a basis weight of 32 g/m² was produced.

Next, a superposed web in which the web was laid in 12 layers using a cross lapper apparatus so as to have a total basis weight of 380 g/m² was produced, and an oil solution for preventing the needles from breaking was sprayed thereto. Then, the superposed web was needle-punched at a density of 3300 punch/cm² alternately from both sides using felt needles, thus producing an entangled web of the island-in-the-sea composite fibers having a basis weight of 500 g/m². Then, the entangled web was subjected to a heat-moisture shrinking treatment at a temperature of 70°C and a humidity of 50% RH for a processing time of 30 seconds.

Then, 15 mass% of a self-emulsified amorphous polycarbonate urethane having a 100% modulus of 3.0 MPa, and an emulsion of a polyurethane containing 2.5 mass% of ammonium sulfate as a heat-sensitive gelling agent were prepared. Then, the emulsion of the polyurethane was impregnated into the entangled web that had been subjected to heat-moisture shrinking, and thereafter dried at 150°C, to coagulate the polyurethane.

Then, the entangled web into which the polyurethane had been impregnated was repeatedly dip-nipped in hot water at 95°C, to remove PVA serving as the sea component, and thereafter the entangled web was dried. Thus, an artificial leather gray fabric including a non-woven fabric in which fiber bundles each including 12 IP-modified PET fibers having an average single fiber fineness of 0.2 dtex were three-dimensionally entangled, and an amorphous polycarbonate polyurethane was formed. The ratio of the polyurethane included in the artificial leather gray fabric was 9.5 mass%.

Then, the artificial leather gray fabric was sliced in half, and thereafter buffed so as to adjust the thickness to 0.60 mm and form a napped surface, thus obtaining an napped artificial leather gray fabric.

Then, a solution containing 0.7 mass% of a polycarbonate-based polyurethane was applied to the napped artificial leather gray fabric by gravure coating, and thereafter dried at 135°C. Then, the napped artificial leather gray fabric was subjected to a flexibilizing treatment by being crumpled in a hot water bath.

Then, an aqueous dispersion in which the particles of the fatty acid amide were dispersed at a solid content ratio of 0.8% was impregnated at a pick-up rate of 70% into the napped artificial leather gray fabric that had been subjected to the flexibilizing treatment, and thereafter dried at 130°C, thus obtaining a napped artificial leather that was colored in a black color and had a napped surface formed by napping the ultrafine fibers to which the particles of the fatty acid amide having an average particle size of 0.4 µm were attached.

Then, the obtained napped artificial leather was evaluated as follows.

### (Particle Size and State of Attachment of Fatty Acid Amide Particles)

The surface of the napped artificial leather was imaged at a magnification of 3000X using a scanning electron microscope (SEM), then an average value of the particle sizes were determined from an image of 15 evenly selected locations, and the state of attachment was further confirmed. FIG. 1 shows an example of the image of the napped artificial leather obtained in Example 1.

### (Lightness L*)

Using a spectrophotometer (CM-3700 manufactured by Minolta), the lightness L* value was determined from the coordinate values of the L*a*b* color system on the surface of the napped artificial leather in accordance with JIS Z 8729. The value was an average of the values determined for three points evenly selected from average positions of the test piece.

### (Color fastness to rubbing)

A multifiber co-woven fabric (co-woven fabric No. 1) prescribed in JIS L 0803 Annex JA and in which woven fabrics of cotton, nylon, acetate, wool, rayon, acrylic, silk, and polyester were woven so as to be parallel to each other was prepared. Then, the color fastness to rubbing in a dry state and a wet state was measured in accordance with JIS L 0849 (Test methods for color fastness to rubbing). Specifically, in the case of the color fastness to rubbing in a dry state, using an Atlas clockmeter CM-5 (manufactured by ATLAS ELECTRIC DEVICES CO.), a dry multifiber co-woven fabric was attached to a glass friction element, then the multifiber co-woven fabric attached to the friction element was brought into contact with the napped surface of a fragment of the napped artificial leather under a load of 900 g, and moved back and forth 10 times. Then, the multifiber co-woven fabric was removed, then Cellotape (registered trademark) was attached to the contaminated portion, and a columnar load of 1.5 ponds was rolled thereon in one reciprocating movement. Thereafter, the Cellotape was detached from the multifiber co-woven fabric.

On the other hand, in the case of the color fastness to rubbing in a wet state, a wetted multifiber co-woven fabric that had been immersed in distilled water and from which excess water had been removed thereafter was attached to a glass friction element, then the multifiber co-woven fabric attached to the friction element was brought into contact with the napped surface of a fragment of the napped artificial leather under a load of load 900 g, and moved back and forth 10 times. Then, the multifiber co-woven fabric was removed and dried at a temperature of 60°C or less, and thereafter Cellotape was attached to the contaminated portion, and a columnar load of 1.5 ponds was rolled thereon in one reciprocating movement. Thereafter, the Cellotape was detached form the multifiber co-woven fabric. Then, the change in color migration to each of the multifiber co-woven fabric in a dry state and a wet state was evaluated using a contamination gray scale (degrees 5 to 1). The grade was determined using the contamination gray scale for each of the woven fabrics, and the grade of the woven fabric made of the most contaminated material was used as the grade of the color migration resistance.

### (Appearance)

A test piece of 20 cm × 20 cm was cut out from the napped artificial leather. Then, the appearance of the surface of the test piece as observed visually was evaluated according to the following criteria.
A: No particulate whitening was confirmed when observed visually.
B: Particulate whitening was confirmed when observed visually.

### (Tactile Impression)

A test piece of 20 cm × 20 cm was cut out from the napped artificial leather. Then, the tactile impression of the surface of the test piece was evaluated in accordance with the following criteria.
A: A smooth tactile impression was observed.
B: The surface had a rough tactile impression.

The results are shown in Table 1.

**[Table 1]**

| | | Ultrafine fibers | | | Fatty acid amide-based compound | | | | | Dye | Color | | Color fastness to rubbing | | Appearance | Tactile impression |
|---|---|---|---|---|---|---|---|---|---|---|---|---|---|---|---|---|
| | | Type | CB | Fineness | Melting point | Concentration in dispersion | Attachment ratio | Particle size | State of attachment to ultrafine fiber surface | | Color tone | L* VALUE | Dry | Wet | | |
| | | | % | dtex | °C | % | % | µm | | | | | Degree | Degree | | |
| | 1 | IP-modified PET | 5 | 0.2 | 145 | 0.8 | 0.5 | 0.4 | Particles | - | Black | 17 | 4-5 | 4 | A | A |
| | 2 | IP-modified PET | 5 | 0.5 | 145 | 0.8 | 0.5 | 0.4 | Particles | - | Black | 12 | 4-5 | 4 | A | A |
| | 3 | IP-modified PET | 5 | 0.05 | 145 | 0.8 | 0.5 | 0.4 | Particles | - | Black | 24 | 4-5 | 4 | A | A |
| | 4 | IP-modified PET | 5 | 0.2 | 110 | 0.8 | 0.5 | 0.4 | Particles | - | Black | 17 | 4-5 | 4 | A | A |
| | 5 | IP-modified PET | 5 | 0.2 | 107 | 0.8 | 0.5 | 0.4 | Particles | - | Black | 17 | 4 | 3-4 | A | A |
| Ex. | 6 | IP-modified PET | 5 | 0.2 | 145 | 0.8 | 0.5 | 0.1 | Particles | - | Black | 17 | 4-5 | 4 | A | A |
| | 7 | IP-modified PET | 5 | 0.2 | 145 | 0.8 | 0.5 | 10 | Particles | - | Black | 17 | 4-5 | 4 | A | A |
| | 8 | IP-modified PET | 1.5 | 0.1 | 145 | 0.8 | 0.5 | 0.4 | Particles | - | Gray | 35 | 4-5 | 3-4 | A | A |
| | 9 | IP-modified PET | - | 0.1 | 145 | 1.3 | 1 | 5.5 | Particles | Disperse dye | Red | 35 | 4-5 | 3-4 | A | A |
| | 10 | Cationic dyeable PET | - | 0.2 | 145 | 1.3 | 1 | 5.5 | Particles | Cationic dye | Red | 35 | 4-5 | 3-4 | A | A |
| | 11 | Ny | - | 0.03 | 145 | 1.7 | 1.5 | 5.5 | Particles | Metal complexed dye | Red | 35 | 4-5 | 3 | A | A |
| | 1 | IP-modified PET | 5 | 0.2 | - | - | - | - | - | - | Black | 17 | 4 | 2-3 | A | A |
| | 2 | IP-modified PET | 1.5 | 0.1 | - | - | - | - | - | - | Gray | 35 | 4 | 2-3 | A | A |
| | 3 | IP-modified PET | - | 0.1 | - | - | - | - | - | Disperse dye | Red | 35 | 4 | 2-3 | A | A |
| | 4 | Cationic dyeable PET | - | 0.2 | - | - | - | - | - | Cationic dye | Red | 35 | 4 | 2-3 | A | A |
| | 5 | Ny | - | 0.03 | - | - | - | - | - | Metal complexed dye | Red | 35 | 4 | 2-3 | A | A |
| Com. Ex. | 6 | IP-modified PET | 5 | 0.2 | 145 | 0.8 | 0.5 | 0.05 | Particles | - | Black | 17 | 4 | 2-3 | A | A |
| | 7 | IP-modified PET | 5 | 0.2 | 145 | 0.8 | 0.5 | 15 | Particles | - | Black | 17 | 4-5 | 4 | B | A |
| | 8 | IP-modified PET | 5 | 0.8 | 145 | 0.8 | 0.5 | 0.4 | Particles | - | Black | 10 | 5 | 4-5 | A | B |
| | 9 | IP-modified PET | 5 | 0.2 | 95 | 0.8 | 0.5 | 0.4 | Non-particulate (turned into film) | - | Black | 17 | 4 | 2-3 | A | A |
| | 10 | IP-modified PET | 5 | 0.2 | 105 | 0.8 | 0.5 | 0.4 | Non-particulate (turned into film) | - | Black | 17 | 4 | 2-3 | A | A |
| | 11 | IP-modified PET | 5 | 0.2 | No clear melting point | 0.8 | 0.5 | 0.4 | Non-particulate (turned into film) | - | Black | 17 | 4 | 2-3 | A | A |

### [Example 2]

A napped artificial leather was obtained in the same manner as in Example 1 except that, instead of producing the non-woven fabric including ultrafine fibers having an average single fiber fineness of 0.2 dtex, a non-woven fabric including ultrafine fibers having an average single fiber fineness of 0.5 dtex was produced by changing the number of islands for spinning to five. Then, the obtained napped artificial leather was evaluated in the same manner as in Example 1. The results are shown in Table 1.

### [Example 3]

A napped artificial leather was obtained in the same manner as in Example 1 except that, instead of producing the non-woven fabrics including ultrafine fibers having an average single fiber fineness of 0.2 dtex, a non-woven fabric including ultrafine fibers having an average single fiber fineness of 0.05 dtex was produced by changing the number of islands for spinning to 50. Then, the obtained napped artificial leather was evaluated in the same manner as in Example 1. The results are shown in Table 1.

### [Example 4]

A napped artificial leather was obtained in the same manner as in Example 1 except that particles of a fatty acid amide for which the melting point had been changed were used, and that drying was performed at 100°C. Then, the obtained napped artificial leather was evaluated in the same manner as in Example 1. The results are shown in Table 1.

### [Example 5]

A napped artificial leather was obtained in the same manner as in Example 1 except that particles of a fatty acid amide for which the melting point had been changed were used, and that drying was performed at 100°C. Then, the obtained napped artificial leather was evaluated in the same manner as in Example 1. The results are shown in Table 1.

### [Example 6]

A napped artificial leather was obtained in the same manner as in Example 1 except that particles of a fatty acid amide for which the average particle size in the aqueous dispersion had been changed were used. Then, the obtained napped artificial leather was evaluated in the same manner as in Example 1. The results are shown in Table 1.

### [Example 7]

A napped artificial leather was obtained in the same manner as in Example 1 except that particles of a fatty acid amide for which the average particle size in the aqueous dispersion had been changed were used. Then, the obtained napped artificial leather was evaluated in the same manner as in Example 1. The results are shown in Table 1.

### [Example 8]

A napped artificial leather was obtained in the same manner as in Example 1 except that, instead of producing the non-woven fabric including ultrafine fibers having an average single fiber fineness of 0.2 dtex for which the IP-modified PET to which 5 mass% of carbon black had been added was used as the island component, a non-woven fabric including ultrafine fibers having an average single fiber fineness of 0.1 dtex for which an IP-modified PET to which 1.5 mass% of carbon black had been added was used as the island component was produced. Then, the obtained napped artificial leather was evaluated in the same manner as in Example 1. The results are shown in Table 1.

### [Example 9]

A napped artificial leather gray fabric was produced in the same manner as in Example 1 except that, instead of producing the non-woven fabric including ultrafine fibers having an average single fiber fineness of 0.2 dtex for which the IP-modified PET to which 5 mass% of carbon black had been added was used as the island component, a non-woven fabric including ultrafine fibers having an average single fiber fineness of 0.1 dtex for which an IP-modified PET including no carbon black was used as the island component was produced. Then, the napped artificial leather gray fabric was dyed with a red disperse dye using a jet dyeing machine.

Then, in the same manner as in Example 1, an aqueous dispersion in which particles of a fatty acid amide for which the average particle size in the aqueous dispersion had been changed was dispersed at a solid content ratio of 1.3% was impregnated into the dyed napped artificial leather gray fabric at a pick-up rate of 70%, followed by drying at 130°C, thus obtaining a napped artificial leather colored in a red color having, on one side thereof, a napped surface formed by napping the ultrafine fibers. Then, the obtained napped artificial leather was evaluated in the same manner as in Example 1. The results are shown in Table 1.

### [Example 10]

A napped artificial leather gray fabric was produced in the same manner as in Example 1 except that, instead of producing the non-woven fabric including ultrafine fibers having an average single fiber fineness of 0.2 dtex for which the IP-modified PET to which 5 mass% of carbon black had been added was used as the island component, a non-woven fabric including ultrafine fibers having an average single fiber fineness of 0.2 dtex for which a cationic dye-dyeable polyethylene terephthalate (cationic dyeable PET) was used as the island component was produced. Then, the napped artificial leather gray fabric was dyed with a red cationic dye using a jet dyeing machine.

Then, an aqueous dispersion in which the same particles of the fatty acid amide as those used in Example 9 were dispersed at a solid content ratio of 1.3% was impregnated into the dyed napped artificial leather gray fabric at a pick-up rate of 70%, followed by drying at 130°C, thus obtaining a napped artificial leather colored in a red color having, on one side thereof, a napped surface formed by napping the ultrafine fibers. Then, the obtained napped artificial leather was evaluated in the same manner as in Example 1. The results are shown in Table 1.

### [Example 11]

Using polyethylene as a sea component, and nylon 6 (Ny) as an island component, the sea component and and the island component were each melted, and supplied to a multicomponent fiber spinning spinneret having nozzle holes disposed so as to form a cross section on which 25 island component portions having uniform cross-sectional areas were distributed in the sea component resin, and the molten strands were discharged from the nozzle holes. At this time, the pressure was adjusted such that the mass ratio between the sea component and the island component satisfied Sea component/Island component = 50/50. Then, a web of the island-in-the-sea composite fibers was obtained in the same manner as in Example 1. Then, in the same manner as in Example 1, the web was needle-punched to produce an entangled web. Then, the entangled web was impregnated with a 13% dimethylformamide (DMF) solution of an ester-ether-based polyurethane, and coagulated. Then, the entangled web including the island-in-the-sea composite fibers into which the ester-ether-based polyurethane has been impregnated was repeatedly dip-nipped in toluene, to remove the polyethylene serving as the sea component, and thereafter the entangled web was dried. Thus, an artificial leather gray fabric including ultrafine fibers of nylon 6 having an average single fiber fineness of 0.03 dtex was obtained.

Then, the artificial leather gray fabric was sliced in half, and one surface thereof was buffed so as to adjust the thickness to 0.60 mm and form a napped surface, thus obtaining a napped artificial leather gray fabric. Then, the napped artificial leather gray fabric was dyed with a red metal complexed dye using a jet dyeing machine.

Then, an aqueous dispersion in which the same particles of the fatty acid amide as those used in Example 9 were dispersed at a solid content ratio of 1.7% was impregnated into the dyed napped artificial leather gray fabric at a pick-up rate of 70%, followed by drying at 130°C, thus obtaining a napped artificial leather colored in a red color having, on one side thereof, a napped surface formed by napping the ultrafine fibers. Then, the obtained napped artificial leather was evaluated in the same manner as in Example 1. The results are shown in Table 1.

### [Comparative Example 1]

A napped artificial leather was obtained and evaluated in the same manner as in Example 1 except that the process of impregnating the particles of the fatty acid amide and the drying process were omitted. The results are shown in Table 1.

### [Comparative Example 2]

A napped artificial leather was obtained and evaluated in the same manner as in Example 8 except that the process of impregnating the particles of the fatty acid amide and the drying process were omitted. The results are shown in Table 1.

### [Comparative Example 3]

A napped artificial leather was obtained and evaluated in the same manner as in Example 9 except that the process of impregnating the particles of the fatty acid amide and the drying process were omitted. The results are shown in Table 1.

### [Comparative Example 4]

A napped artificial leather was obtained and evaluated in the same manner as in Example 10 except that the process of impregnating the particles of the fatty acid amide and the drying process were omitted. The results are shown in Table 1.

### [Comparative Example 5]

A napped artificial leather was obtained and evaluated in the same manner as in Example 11 except that the process of impregnating the particles of the fatty acid amide and the drying process were omitted. The results are shown in Table 1.

### [Comparative Example 6]

A napped artificial leather was obtained in the same manner as in Example 1 except that particles of a fatty acid amide for which the average particle size had been changed were used. Then, the obtained napped artificial leather was evaluated in the same manner as in Example 1. The results are shown in Table 1.

### [Comparative Example 7]

A napped artificial leather was obtained in the same manner as in Example 1 except that particles of a fatty acid amide for which the average particle size in the aqueous dispersion had been changed were used. Then, the obtained napped artificial leather was evaluated in the same manner as in Example 1. The results are shown in Table 1.

### [Comparative Example 8]

A napped artificial leather was obtained in the same manner as in Example 1 except that, instead of producing the non-woven fabric including ultrafine fibers having an average single fiber fineness of 0.2 dtex, a non-woven fabric including ultrafine fibers having an average single fiber fineness of 0.8 dtex was produced. Then, the obtained napped artificial leather was evaluated in the same manner as in Example 1. The results are shown in Table 1.

### [Comparative Example 9]

A napped artificial leather was obtained in the same manner as in Example 1 except that, instead of using the particles of the fatty acid amide having an average particle size of 0.4 µm and a melting point of 145°C, particles of a fatty acid amide having a melting point of 95°C were used. Then, the obtained napped artificial leather was evaluated in the same manner as in Example 1. The results are shown in Table 1.

### [Comparative Example 10]

A napped artificial leather was obtained in the same manner as in Example 1 except that, instead of using the particles of the fatty acid amide having an average particle size of 0.4 µm and a melting point of 145°C, particles of a quaternary ammonium salt having a melting point of 105°C , obtained by causing epihalohydrin to act on a fatty acid amide, were used. Then, the obtained napped artificial leather was evaluated in the same manner as in Example 1. The results are shown in Table 1.

### [Comparative Example 11]

A napped artificial leather was obtained in the same manner as in Example 1 except that, instead of using the particles of the fatty acid amide having an average particle size of 0.4 µm and a melting point of 145°C, particles of [(C₂₁H₄₃C=ONHC₂H₄NHC₂H₄N)₂C=O(C₂H₄NHC=OC₂₁H₄₃)₂] in which a fatty acid amide having no clear melting point was crosslinked by a carbonyl group were used. Then, the obtained napped artificial leather was evaluated in the same manner as in Example 1. The results are shown in Table 1.

Referring to the results in Table 1, it can be seen that all of the napped artificial leathers of Examples 1, 8, 9, 10 and 11, in which the fatty acid amide was attached in the form of particles, exhibited a significant improvement in color fastness to rubbing, in particular, color fastness to rubbing in a wet state, as compared with the napped artificial leathers of Comparative Examples 1, 2, 3, 4 and 5, which were produced in the same manner as in Examples 1, 8, 9, 10 and 11, respectively, except that the particles of the fatty acid amide were not attached. The napped artificial leather obtained in Comparative Example 6, in which the fatty acid amide having an average particle size of 0.05 µm was attached in the form of particles, and the napped artificial leather obtained in Comparative Example 7, in which the particles of the fatty acid amide having an average particle size of 15 µm were attached in the form of particles, exhibited no improvement in color fastness to rubbing as compared with the napped artificial leather of Example 1. In the case of the napped artificial leather obtained in Comparative Example 9, which was produced by using the particles of the fatty acid amide having a melting point of 95°C and performing drying at 130°C, it seems that the particles of the fatty acid amide were melted, and the presence of the particles was not observed. Also, the napped artificial leathers obtained in Comparative Examples 9, 10 and 11 exhibited no improvement in color fastness to rubbing.

## Claims

1. A colored napped artificial leather comprising:
a fiber-entangled body including ultrafine fibers having an average single fiber fineness of 0.5 dtex or less; and
an elastic polymer impregnated into the fiber-entangled body,
the napped artificial leather having, at least on one side thereof, a napped surface formed by napping the ultrafine fibers,
wherein the napped artificial leather further comprises particles of a fatty acid amide-based compound that are at least attached to surfaces of the ultrafine fibers and that have an average particle size of 0.1 to 10 µm, as determined by scanning electron microscopy in accordance with the method described in the description.

2. The napped artificial leather according to claim 1,
wherein the particles of the fatty acid amide-based compound are attached to the ultrafine fibers constituting the napped surface.

3. The napped artificial leather according to claim 1 or 2,
wherein the fatty acid amide-based compound has a melting point of 110°C or more.

4. The napped artificial leather according to any one of claims 1 to 3,
wherein a content ratio of the particles is 0.2 to 5 mass% in the napped artificial leather.

5. The napped artificial leather according to any one of claims 1 to 4,
wherein the napped surface has a lightness L* value of 40 or less in a color coordinate space (L*a*b* color space).

6. A method for producing a napped artificial leather, comprising the steps of:
preparing a napped artificial leather gray fabric including a fiber-entangled body of ultrafine fibers having an average single fiber fineness of 0.5 dtex or less, and an elastic polymer impregnated into the fiber-entangled body, the napped artificial leather gray fabric having, at least on one side thereof, a napped surface formed by napping the ultrafine fibers; and
applying, to the napped artificial leather gray fabric, a dispersion of particles of a fatty acid amide-based compound that have an average particle size of 0.1 to 10 µm, as determined by scanning electron microscopy in accordance with the method described in the description, and drying the dispersion at a temperature less than a melting point of the fatty acid amide-based compound.

## Patentansprüche

1. Ein farbiges, aufgerautes Kunstleder, umfassend:
einen Körper mit verschlungenen Fasern, welcher ultrafeine Fasern mit einer mittleren Feinheit der einzelnen Fasern von 0,5 dtex oder weniger enthält;
und
ein elastisches Polymer, welches in den Körper mit verschlungenen Fasern imprägniert ist,
wobei das aufgeraute Kunstleder zumindest auf einer Seite eine aufgeraute Oberfläche aufweist, welche durch Aufrauen der ultrafeinen Fasern gebildet wird,
wobei das aufgeraute Kunstleder ferner Teilchen einer Verbindung auf Basis eines Fettsäureamids umfasst, welche zumindest an Oberflächen der ultrafeinen Fasern angebracht sind und eine mittlere Teilchengröße von 0,1 bis 10 µm, wie durch Rasterelektronenmikroskopie gemäß dem in der Beschreibung beschriebenen Verfahren bestimmt, aufweisen.

2. Das aufgeraute Kunstleder gemäß Anspruch 1,
wobei die Teilchen der Verbindung auf Basis eines Fettsäureamids an die ultrafeinen Fasern angebracht sind, welche die aufgeraute Oberfläche bilden.

3. Das aufgeraute Kunstleder gemäß Anspruch 1 oder 2,
wobei die Verbindung auf Basis eines Fettsäureamids einen Schmelzpunkt von 110 °C oder mehr aufweist.

4. Das aufgeraute Kunstleder gemäß einem der Ansprüche 1 bis 3,
wobei das Gehaltsverhältnis der Teilchen in dem aufgerauten Kunstleder 0,2 bis 5 Massen-% beträgt.

5. Das aufgeraute Kunstleder gemäß einem der Ansprüche 1 bis 4,
wobei die aufgeraute Oberfläche einen Helligkeitswert L* von 40 oder weniger in einem Farbkoordinatenraum (L*a*b*-Farbraum) aufweist.

6. Ein Verfahren zur Herstellung eines aufgerauten Kunstleders, umfassend die Schritte:
Herstellen eines aufgerauten Kunstleder-Graustoffs, welcher einen Körper mit verschlungenen Fasern aus ultrafeinen Fasern mit einer mittleren Feinheit der einzelnen Fasern von 0,5 dtex oder weniger und ein in den Körper mit verschlungenen Fasern imprägniertes elastisches Polymer umfasst, wobei der aufgeraute Kunstleder-Graustoff zumindest auf einer Seite eine aufgeraute Oberfläche aufweist, welche durch Aufrauen der ultrafeinen Fasern gebildet wird; und
Aufbringen einer Dispersion von Teilchen einer Verbindung auf Basis eines Fettsäureamids, welche eine mittlere Teilchengröße von 0,1 bis 10 µm aufweisen, wie durch Rasterelektronenmikroskopie gemäß dem in der Beschreibung beschriebenen Verfahren bestimmt, auf den aufgerauten Kunstleder-Graustoff,
und Trocknen der Dispersion bei einer Temperatur unterhalb eines Schmelzpunktes der Verbindung auf Basis eines Fettsäureamids.

## Revendications

1. Cuir artificiel duveteux coloré comprenant :
un corps à fibres emmêlées comprenant des fibres ultrafines ayant une finesse monofibre moyenne de 0,5 dtex ou moins ; et
un polymère élastique imprégné dans le corps à fibres emmêlées,
le cuir artificiel duveteux ayant, au moins sur une face de celui-ci, une surface duveteuse formée par duvetage des fibres ultrafines,
où le cuir artificiel duveteux comprend en outre des particules d'un composé à base d'amide d'acide gras qui sont au moins fixées aux surfaces des fibres ultrafines et qui ont une taille moyenne de particules de 0,1 à 10 µm, telle que déterminée par microscopie électronique à balayage conformément à la méthode décrite dans la description.

2. Cuir artificiel duveteux selon la revendication 1,
dans lequel les particules du composé à base d'amide d'acide gras sont fixées aux fibres ultrafines constituant la surface duveteuse.

3. Cuir artificiel duveteux selon la revendication 1 ou 2,
dans lequel le composé à base d'amide d'acide gras a un point de fusion de 110°C ou plus.

4. Cuir artificiel duveteux selon l'une quelconque des revendications 1 à 3,
dans lequel un rapport de teneur en les particules est de 0,2 à 5 % en masse dans le cuir artificiel duveteux.

5. Cuir artificiel duveteux selon l'une quelconque des revendications 1 à 4,
dans lequel la surface duveteuse a une valeur de luminosité L* de 40 ou moins dans un espace de coordonnées de couleur (espace de couleur L*a*b).

6. Méthode de production d'un cuir artificiel duveteux, comprenant les étapes de :
préparation d'un textile gris de cuir artificiel duveteux comprenant un corps à fibres emmêlées de fibres ultrafines ayant une finesse monofibre moyenne de 0,5 dtex ou moins, et un polymère élastique imprégné dans le corps à fibres emmêlées, le textile gris de cuir artificiel duveteux ayant, au moins sur une face de celui-ci, une surface duveteuse formée par duvetage des fibres ultrafines ; et
application, au textile gris de cuir artificiel duveteux, d'une dispersion de particules d'un composé à base d'amide d'acide gras qui ont une taille moyenne de particules de 0,1 à 10 µm, telle que déterminée par microscopie électronique à balayage conformément à la méthode décrite dans la description,
et séchage de la dispersion à une température inférieure à un point de fusion du composé à base d'amide d'acide gras.
